# EUROPEAN PATENT SPECIFICATION

(11) **EP 3 445 573 B1**
(45) Date of publication and mention of the grant of the patent: **22.01.2020**
(21) Application number: 17725772.2
(22) Date of filing: 13.04.2017
(51) Int. Cl.: B32B 5/18, B32B 5/32, B32B 7/12, B32B 3/08, B32B 3/04, B32B 38/18, B29D 99/00, B32B 38/00, B32B 37/12, B29C 43/58, B29C 43/20, B29L 31/00, B32B 37/00

(54) **MACHINE AND METHOD FOR PACKAGING MATTRESSES**
MASCHINE UND VERFAHREN ZUM VERPACKEN VON MATRATZEN
MACHINE ET MÉTHODE À EMBALLER DES MATELAS

(30) Priority: 20.04.2016 IT UA20162736
(43) Date of publication of application: 27.02.2019
(73) Proprietor: Quarrata Forniture S.r.l., 51039 Quarrata (PT) (IT)
(72) Inventor: TROVI, Roberto, 51039 Quarrata (PT) (IT)
(74) Representative: Firmati, Leonardo
(86) International application number: PCT/IB2017/052144
(87) International publication number: WO 2017/182921

(56) References cited:
- EP-A1- 2 656 996
- WO-A1-2014/207634
- JP-A- H06 304 347
- US-A1- 2010 072 676
- DATABASE WPI Week 199705 Thomson Scientific, London, GB; AN 1997-045541 XP002765824, & IT 1 261 930 B (MARCELLIFLEX SNC) 4 June 1996 (1996-06-04)
- DATABASE WPI Week 201519 Thomson Scientific, London, GB; AN 2015-15340Q XP002765825, -& CN 204 111 304 U (XILINMEN FURNITURE CO LTD) 21 January 2015 (2015-01-21)

## Description

### Technical field

This invention relates to a machine and a process for packaging mattresses.

More specifically, this invention relates to a machine and a process for packaging multilayer mattresses, that is to say, comprising at least one functional layer.

### Background art

The term "multilayer mattress" means a mattress characterised by a series of functional layers having different functional and/or structural features preferably along the thickness of the mattress. For example, this invention may be used for packaging mattresses with superposed layers, such as mattresses made of foam rubber (expanded polyurethane, natural and synthetic latex, memory-foam ...) or for packaging mattresses of the "encapsulated" type, that is to say, wherein the inside of the mattress is made with a space delimited by flanks for containing one or more central portions comprising springs, for example for making spring mattresses, or other functionally similar elements.

Therefore, the term "functional layer" means both a layer which is homogeneous in terms of material and/or structure, for example a layer of foam rubber, and a differentiated layer comprising, for example, the above-mentioned flanks delimiting one or more central portions, for example an inner layer of a spring mattress.

Currently, the superposition of the functional layers is performed manually to guarantee the correct alignment of the layers and therefore the necessary quality of the mattress being processed.

The need in the sector for automated systems for packaging any type of layered mattress, which guarantees the same quality levels as traditional manual processes, increasing the production and reducing the presence of skilled labour, therefore remains unsatisfied.

Examples of known automated system are described in WO2014207634, EP2656996 and JPH06304347.

### Disclosure of the invention

The aim of this invention is therefore to provide a machine and a process for packaging mattresses which overcomes the above-mentioned drawbacks.

More specifically, the aim of the invention is to provide a machine and a process for packaging mattresses which allows the process to be automated, guaranteeing a high quality of the end product.

Another aim of the invention has for an aim to provide a machine for packaging mattresses which has limited dimensions and which can be integrated in a packaging line.

The preset aims are achieved by a machine and a process for packaging mattresses according to one or more of the appended claims.

The dependent claims correspond to possible different embodiments of the invention.

More specifically, this invention relates to a machine according to claim 1 for packaging mattresses comprising at least two functional layers. The machine comprises first movement means and second movement means leading to a placement station wherein a functional layer of the mattress is aligned and positioned above a mattress being processed.

Means for applying adhesive material are positioned along the first movement path and configured to distribute adhesive material on a surface of the mattress being processed.

The second movement path is at least partly positioned above the first movement path.

Detection means are configured and programmed for detecting the position and the dimensions of the mattress being processed and of the functional layer.

The control unit is operatively connected at least to the first movement means, to the second movement means and to the detection means and controls the first and/or the second movement means for modifying the position of the mattress being processed and the functional layer so as to cause the position of the mattress being processed and of the functional layer to coincide along the relative movement path at the placement station.

As disclosed in claim 7, this invention also relates to a process for packaging mattresses according to which a mattress being processed and a functional layer are independently moved towards a placement station wherein the functional layer is placed with precision on the mattress being processed having detected the position and the dimensions of the mattress being processed and of the functional layer. More specifically, the position of the mattress being processed and of the functional layer is modified as a function of the position and of the dimensions detected so as to cause the position of the mattress being processed and of the functional layer to coincide along the relative movement path at the placement station.

Adhesive material is preferably distributed on a surface of the mattress being processed during the feeding of the mattress being processed along the first movement path.

According to one or more of the above-mentioned aspects, this invention may comprise one or more of the following features.

There may be an end conveyor leading to the placement station and inclined with respect to a horizontal plane. The end conveyor defines an end stretch of the second movement path and is adjustable for modifying the inclination. Advantageously, the inclination of said end stretch may be modified according to the thickness of the mattress being processed. This operation is also advantageous to allow an excellent alignment of any layers to be superposed.

The packaging machine may be used for packaging multilayer mattresses, wherein each functional layer is a homogeneous layer as regards the material and/or the structure.

Alternatively, the packaging machine can be used for packaging multilayer mattresses of the "encapsulated" type. In this case, the functional layer may comprises at least one flank and the machine may comprise means for gripping and stiffening the flank movable between the second movement path and the placement station. In this case, there can also means for gripping the central portion comprising springs or the like wherein the gripping means are configured to place the central portion between the flanks of the mattress.

The control unit of the machine can be programmed for controlling the first movement means in such a way as to move the mattress being processed alternately along the first direction of forward movement and along a direction of withdrawal. Preferably, the reciprocating motion extends at least between the means for applying the adhesive material and the placement station. Preferably, the step of distributing the adhesive material and the step of depositing the functional layer on the mattress being processed are repeated until obtaining the final mattress.

Further features and advantages of the invention are more apparent in the non-limiting description which follows of a preferred non-exclusive embodiment of a machine and a process for packaging mattresses.

### Brief description of the drawings

The description is set out below with reference to the accompanying drawings which are provided solely for purposes of illustration without restricting the scope of the invention and in which:
- Figure 1 schematically illustrates a side view of a machine for packaging mattresses according to this invention;
- Figure 2 illustrates the machine of Figure 1 in a possible operating condition;
- Figure 3 schematically illustrates a top view of the machine of Figure 2;
- Figure 4 illustrates the machine of Figure 1 in a possible operating condition;
- Figure 5 schematically illustrates a top view of the machine of Figure 4;
- Figures 6 to 9 illustrate the machine of Figure 1 in different and successive operating conditions;
- Figure 10 schematically illustrates a top view of the machine of Figure 9;
- Figure 11 is a schematic perspective view of a portion of a mattress of the "encapsulated" type.

### Detailed description of preferred embodiments of the invention

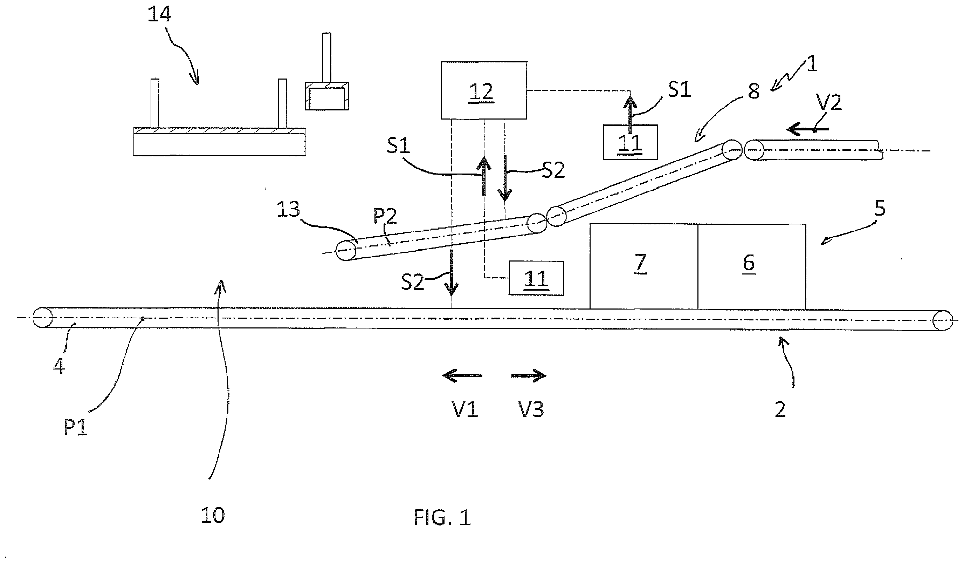

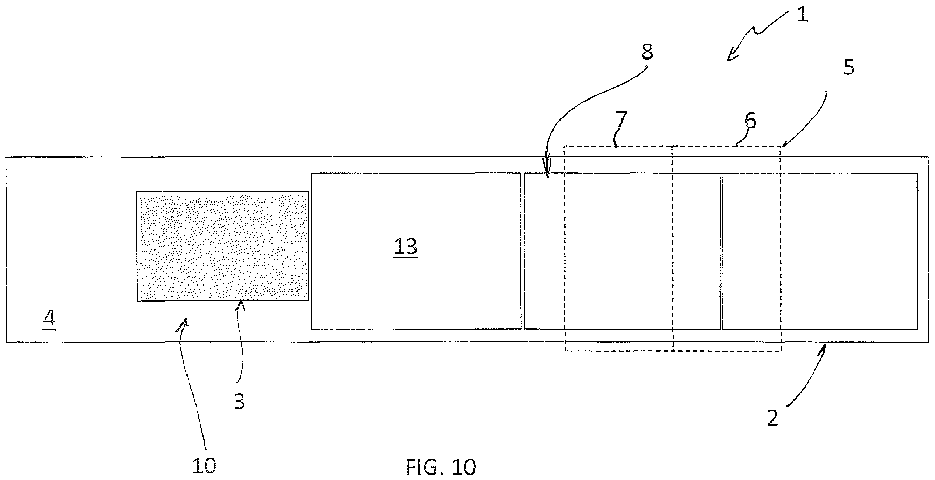

With reference to Figures 1 to 10, the numeral 1 denotes in its entirety a machine for packaging mattresses according to this invention, hereinafter referred to simply as the machine 1.

The machine may be used for packaging mattresses comprising at least two functional layers, according to the definition of "functional layer" provided above. In particular, with reference to Figures 1 to 10, the description below refers to a machine and a relative process for packaging mattresses of the "encapsulated" type, according to the definition provided above.

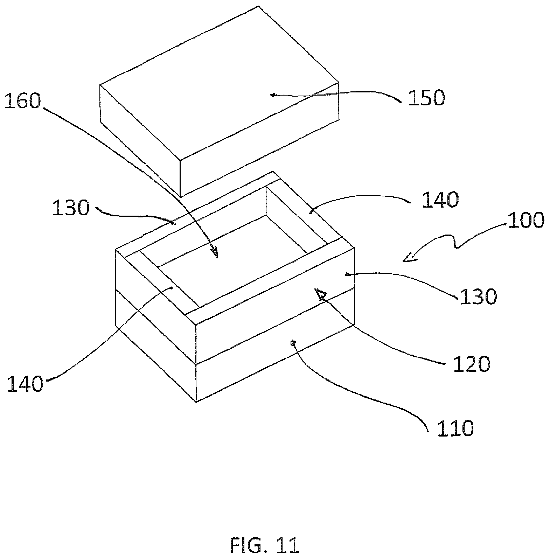

Figure 11 schematically illustrates a portion of a mattress 100 of the "encapsulated" type comprising a bottom layer 110, a central layer 120 comprising flanks 130, 140 and an upper closure layer 150. When all the layers are superposed on a space 160 is generated inside the mattress 100 designed to receive one or more central portions, not illustrated, each comprising, for example, springs or similar elements. More specifically, the flanks 130, 140 are designed to delimit at least partly the space 160 inside the mattress.

The machine 1 comprises first movement means 2 configured to move a mattress being processed 3 along a first movement path P1 and according to a first feed direction V1.

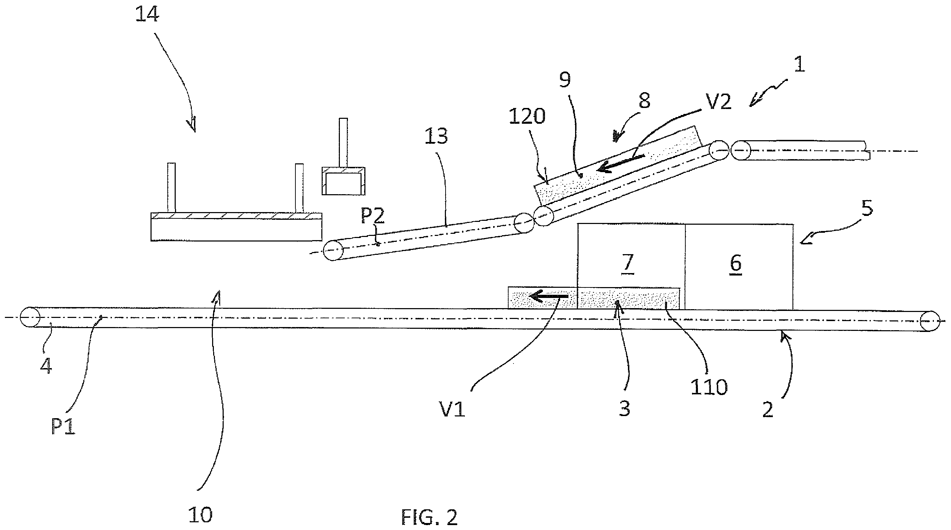

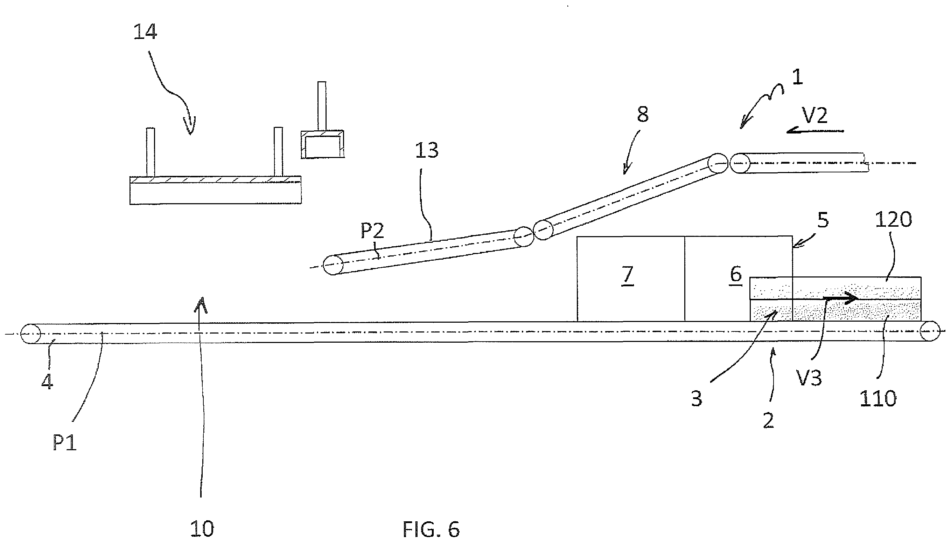

The term "mattress being processed" means a functional layer of a mattress or several functional layers already assembled during the packaging process for example according to this invention. The term "mattress being processed" therefore indicates a variable element during the packaging process and transported by the first movement means 2. In the case of multilayer mattress, for example made of foam rubber, the "mattress being processed" may also comprise one or more functional layers of the mattress. In the case of a mattress of the "encapsulated" type, the "mattress being processed" 3 may comprise the bottom layer 110, as in the example illustrated in Figure 2, or an assembly being processed comprising the bottom layer 110 and one or more flanks 130, 140 (and, if necessary, the central portion, for example springs), as in the example illustrated in Figures 6 to 8.

The first movement means 2 may comprise one or more conveyor belts 4 positioned along the first movement path P1. For simplicity the accompanying drawings illustrate a single conveyor belt 4. Preferably, the belt conveyor(s) 4 are positioned in such a way as to define a first horizontal movement path P1.

The machine 1 also comprises means for applying adhesive material 5 positioned along the first movement path P1. The means for applying the adhesive material 5 are configured to distribute adhesive material on a surface of the mattress being processed, in particular an upper surface of the mattress being processed rested on the conveyor belt 4. The means for applying adhesive material 5 can be configured for uniformly applying the adhesive material, thereby obtaining a uniform and continuous layer or for making a predetermined pattern on one or more parts of the surface of application of the mattress being processed 3. The application of the adhesive material occurs whilst the mattress being processed 3 is located along the first movement path P1, preferably whilst the mattress being processed 3 is moving, still more preferably whilst the mattress being processed 3 moves along the first movement path P1 according to the first feed direction V1. According to a possible embodiment, of which the accompanying drawings constitute a non-limiting example, the means for applying adhesive material 5 comprise one or more chambers 6, 7 passed through by the first movement means 2, in particular by the conveyor belt 4. Preferably a first chamber 6 comprises devices for applying the adhesive material and a second chamber 7 comprises devices for predrying the adhesive material.

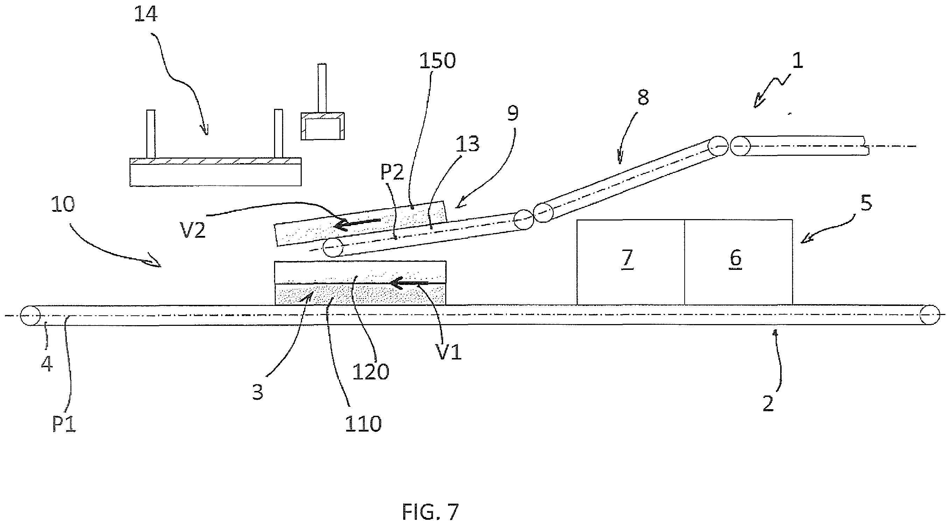

The machine 1 also comprises second movement means 8 configured to move a functional layer 9, to be applied to the mattress being processed 3, along a second movement path P2 and according to a second feed direction V2. In the case of a multilayer mattress, for example made of foam rubber, the functional layer 9 may consist of one of the functional layers of the mattress. In the case of a mattress of the "encapsulated" type, for example a spring mattress, the functional layer 9 may consist of at least one portion of a central layer 120 comprising one or more flanks 130, 140 as in the example illustrated in Figure 2 or an upper closure layer 150 as for example illustrated in Figures 7 to 9.

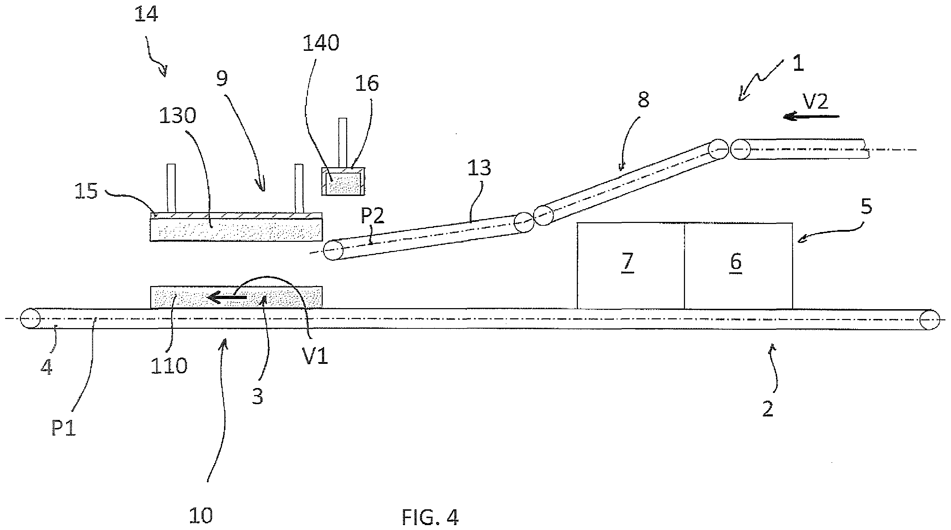

According to a possible embodiment, of which the accompanying drawings constitute a non-limiting example, the second movement path P2 is located at least partly above the first movement path P1 until leading into it at a placement station 10, wherein the functional layer 9 is placed on the mattress being processed 3. This step is illustrated for example in Figure 4.

The machine 1 also comprises detection means 11 configured and programmed to detect the position and the sizes of the mattress being processed 3 and of the functional layer 9. The machine 1 also comprises a c control unit 12, illustrated by way of example in Figure 1, operatively connected at least to the first movement means 2, to the second movement means 8 and to the detection means 11.

The control unit 12 is programmed for:
- receiving a detection signal S1 from the detection means 11 indicating the position and the sizes of the mattress being processed 3 and of the functional layer 9,
- generating a control signal S2 of the first and second movement means to change the position of the mattress being processed 3 and of the functional layer 9 as a function of the detection signal S1 so as to cause the position of the mattress being processed 3 and of the functional layer 9 to coincide along the relative movement path at the placement station 10.

In accordance with one possible embodiment, the second movement means 8 comprise at least one end conveyor 13 leading to the placement station 10. The end conveyor 13 is preferably inclined relative to a horizontal plane.

The machine 1 may comprise adjustment means, not illustrated, configured for modifying the inclination of the end conveyor 13. The control unit 12 is preferably operatively connected to the adjusting means and is programmed to activate them so as to change the inclination of the end conveyor 13 as a function of the thickness of the mattress being processed 3.

According to a possible embodiment designed to make mattresses of the "encapsulated" type, of which the accompanying drawings constitute a non-limiting example, the machine 1 may comprise gripping and stiffening means 14 configured to grip and hold in shape each flank 130, 140. The gripping and stiffening means 14 are movable, in particular between the second movement path P2 and the placement station 10. For example, the gripping and stiffening means 14 comprise a gripping duct 15 for each flank 130, 140 having a length substantially the same as the length of the respective flank and defining a housing for gripping designed to receive the flank. More specifically, the gripping duct 15, 16 has the shape of a "C" and is open at the bottom to receive a respective flank.

The gripping duct 15, 16 could also be open at the top provided it maintains the two lateral wall parallel constituting the gripping housing.

Each gripping duct 15, 16 can be actuated independently of the other for example both horizontally and vertically, and is configured to stably grip each flank and convey them on the mattress being processed 3 to the placement station 10. More specifically, there may be two gripping ducts 15 positioned and configured to grip and move the flanks 130 and two gripping ducts 16 positioned and designed to grip and move the flanks 140.

It should be noted that the flanks 130, 140 are generally thin and very flexible elements and, therefore, difficult to move and position if not adequately "stiffened".

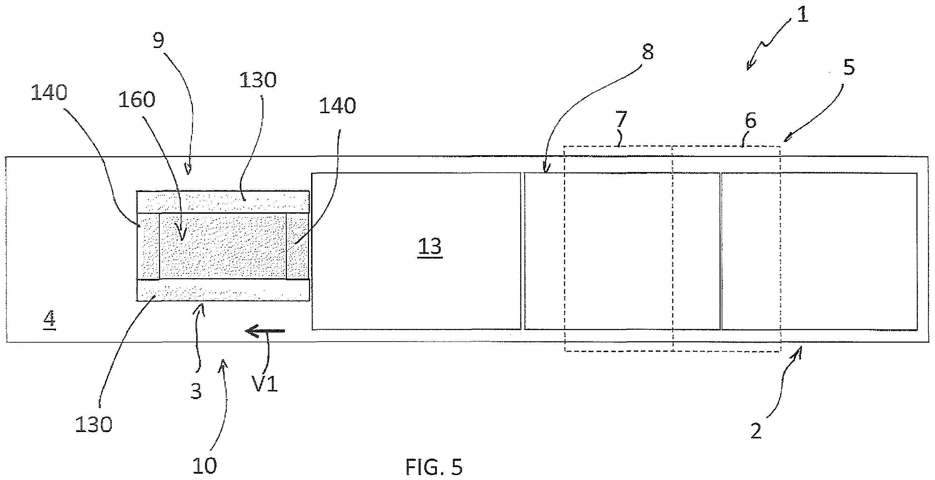

According to a possible embodiment designed to make mattresses of the "encapsulated" type, the machine 1 may comprise means for gripping a central portion of the "encapsulated" mattress. The gripping means are not illustrated and are configured for positioning the central portion between the flanks 130, 140 for example during the steps illustrated in Figures 4 and/or 5.

According to a possible embodiment, of which the accompanying drawings constitute a non-limiting example, the control unit 12 is programmed to control the first movement means 2 so as to move the mattress being processed 3 alternatively according to the first feed direction V1 and according to a withdrawal direction V3, which is opposite to the first feed direction V1, at least between the means for applying the adhesive material 5 and the placement station 10. This movement is described below in more detail with reference to the packaging process and it is for example illustrated in Figures 2 and 6.

In accordance with a further aspect, this invention relates to a method for packaging mattresses 100 comprising at least two functional layers.

This process comprises moving a mattress being processed 3 along a first movement path P1 and in a first feed direction V1.

Whilst the mattress being processed 3 is along the first movement path P1, the process for packaging comprises distributing adhesive material on a surface of the mattress being processed. Preferably, the distribution of the adhesive material occurs during the movement of the mattress being processed 3, still more preferably, during feeding the mattress being processed along the first movement path P1.

The packaging process also comprises movement of one functional layer 9 to be applied to the mattress being processed 3 along a second movement path P2 and along a second feed direction V2. Preferably, the second movement path P2 is located at least partly above the first movement path P1 until leading into it at a placement station 10, wherein the functional layer is placed on the mattress being processed 3.

The position and the dimensions of the mattress being processed and the functional layer are detected and the position of the mattress being processed and the functional layer is modified as a function of the position and of the dimensions detected, so as to cause the position of the mattress being processed 3 and of the functional layer 9 to coincide along the respective movement path, at the placement station 10.

Lastly, the functional layer 9 is placed on the mattress being processed 3 at the placement station 10.

Preferably, the inclination of an end stretch 13 of the second movement path P2 is modified as a function of the thickness of the mattress being processed 3.

If the mattress to be packaged is of the "encapsulated" type and the functional layer 9 to be applied to the mattress being processed 3 comprises at least one flank 130, 140 designed to delimit partly a space inside the mattress, each flank may be gripped and stiffened to transfer it between the second movement path P2 and the placement station 10.

If the mattress to be packaged is of the "encapsulated" type and the functional layer 9 to be applied to the mattress being processed 3 comprises a central portion designed to be housed in the space inside the mattress, the central portion may be gripped and placed between the flanks.

Advantageously, the mattress being processed 3 may be moved alternatively according to the first feed direction V1 and according to a withdrawal direction V3 which is opposite to the first feed direction V1, repeating the step of distributing the adhesive material and the step of placing the functional layer on the mattress being processed.

Figures 2 to 10 illustrate a possible example for applying the process described above in the case of packaging mattresses of the "encapsulated" type.

Figure 2 illustrates a mattress being processed 3 consisting of the bottom layer 110 being fed along the first movement path P1 in the feed direction V1 and passing through the means for applying adhesive material 5. Simultaneously, a functional layer 9 comprising at least one portion of the central layer 120, in particular of the flanks 130, 140, feeds along the second movement path P2 according to the feed direction V2. Both the mattress being processed 3 and the functional layer 9 are directed towards the placement station 10.

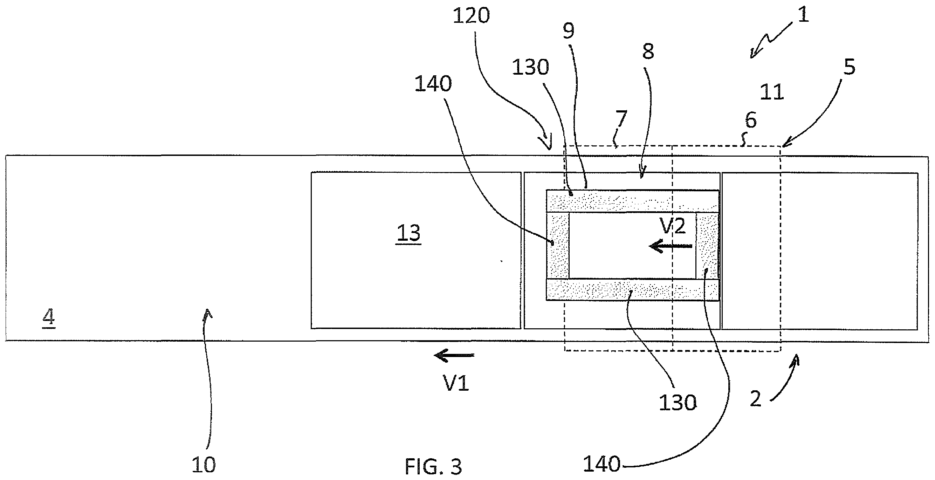

Figure 3 shows the operating condition of Figure 2 with greater detail of the central layer of 120 defining the functional layer 9 as the flanks 130, 140 are visible.

With reference to Figure 4, the mattress being processed 3, still comprising the bottom layer 110, has reached the placement station 10. Moreover, the gripping and stiffening means 14 have gripped the flanks 130, 140 and in particular the gripping ducts 15 have gripped the flanks 130 and the gripping ducts 16 have gripped the flanks 140.

Figure 5 illustrates the operating condition immediately after that of Figure 4 with a greater detail of the central layer 120 showing the flanks 130, 140 which have been positioned on the bottom layer 110. The formation of the space 160 then starts. From this moment onwards the mattress being processed 3 comprises both the bottom layer 110 and the central layer 120 or at least the flanks 130, 140. In accordance with a step not illustrated, the central portion, comprising, for example, the springs, is positioned between the flanks 130, 140.

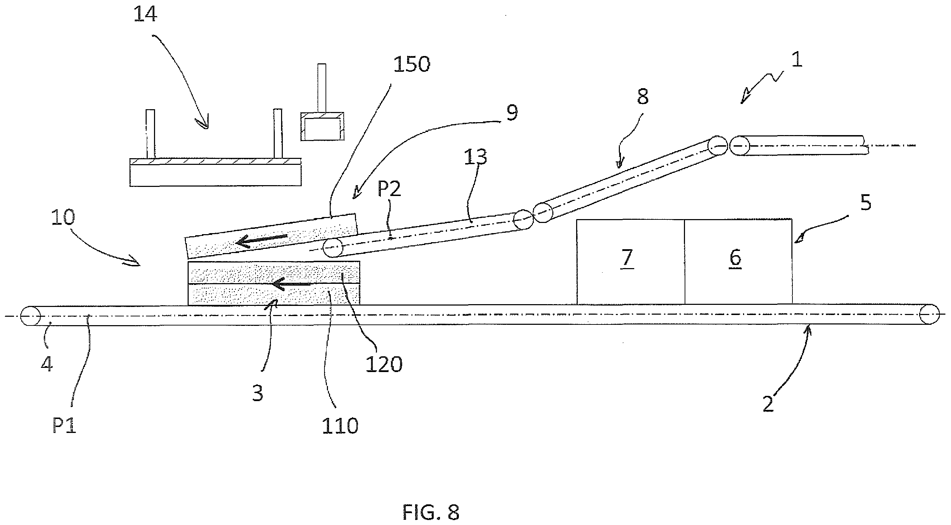

With reference to Figure 6, the mattress being processed 3 (comprising the bottom layer 110 and the central layer 120) is moved from the first movement means 2 in the direction of withdrawal V3 so as to encounter again the means for application of adhesive material 5. The mattress being processed 3 preferably retracts until passing the means for applying adhesive material 5. The first movement means 2 again reverse the movement of the mattress being processed 3 making it again feed along direction V1 in such a way as to again encounter the means for applying adhesive material 5 for a new application subordinate to the adhesion of a new functional layer 9 which, with reference to the mattress of the "encapsulated" type, may consist of the upper closure layer 150. With reference to Figure 7, the mattress being processed 3 is then moved according to the feed direction of V1 towards the placement station 10 whilst the new functional layer 9 comprising the upper closure layer 150 is moved by the second movement means 8 in the feed direction V2. Both the mattress being processed 3 and the functional layer 9 are then fed towards the placement station 10. With reference to Figure 8, the upper closure layer 150 is synchronized with the mattress being processed 3 thanks to the control signal S2 generated by the control unit 12 so as to cause the position of the mattress being processed 3 and the functional layer to coincide along the respective movement path at the placement station.

More specifically, following the detection of the position and the dimensions of the mattress being processed and of the functional layer, the control unit 12 controls the first and the second movement means.

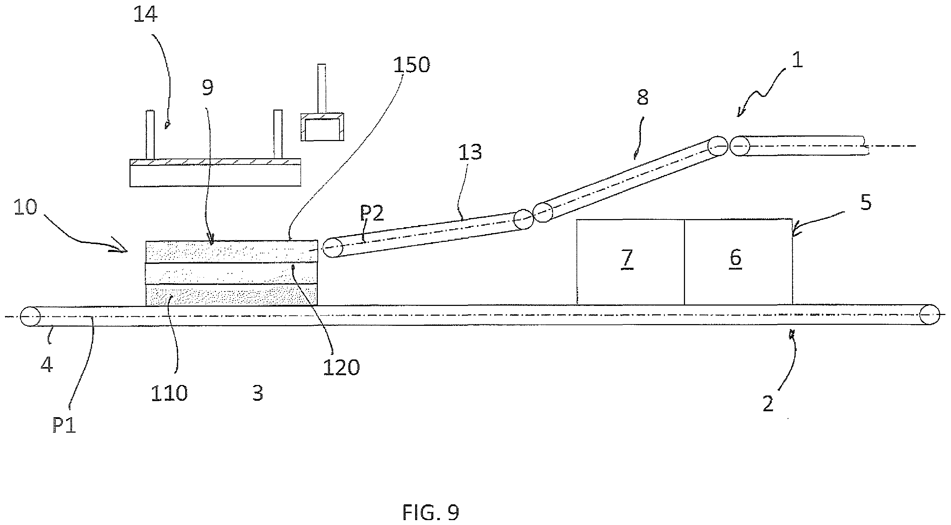

Thanks to this synchronisation, with reference to Figure 9, the functional layers of the mattress can be perfectly superposed in an aligned fashion. As described above, both the machine and the process according to this invention can be used for the production of any type of multilayer mattress, in particular for mattresses of the "encapsulated" type, preferably spring mattresses, or for foam rubber mattresses.

In the case of multilayer mattresses, for example made of foam rubber, the machine and the process according to this invention allow a perfect alignment and a perfect superposing of all the layers to be obtained thanks to the presence of the detection means and the use of the suitably programmed control unit. This advantage can also be reached in the case of mattresses of the "encapsulated" type, with reference, for example, to the upper closing state 150. Preferably, the detection means can be made by means of reading video cameras designed to identify the dimensions and the alignment of the edges.

Moreover, in the case of mattresses of the "encapsulated"' type, thanks to the presence of the gripping and stiffening means it is possible to position the flanks in a precise and aligned manner with the bottom layer 110. The gripping and stiffening means are movable on several axes and can also be made in such a way as to rotate in particular about a vertical axis.

The machine is compact also thanks to the provision of movement means designed to provide a feed motion and a withdrawal motion of the mattress being processed whilst guaranteeing the precision of the alignment and the positioning also thanks to the adjustment of the inclination of the end stretch of the second path according to the height reached by the mattress being processed 3.

Alternatively, the machine and the process for packaging mattresses can be adapted and/or configured for packaging multilayer mattresses, wherein each functional layer is a homogeneous layer as regards the material and/or the structure, for example in the case of mattresses made of foam rubber.

## Claims

1. A machine (1) for packaging mattresses (100), comprising at least two functional layers (110, 120, 150), the packaging machine comprising:
first movement means (2) configured to move a mattress being processed (3) along a first movement path (P1) and according to a first feed direction (V1), the mattress being processed (3) comprising one or more functional layers,
means for applying adhesive material (5) positioned along the first movement path (P1) and configured to distribute adhesive material on a surface of the mattress being processed (3) which is positioned along the first movement path (P1),
second movement means (8) configured to move a functional layer (9) to be applied to the mattress being processed (3) along a second movement path (P2) and according to a second feed direction (V2), the second movement path (P2) being located preferably at least partly above the first movement path (P1) and converging with the first movement path (P1) at a placement station (10) wherein the functional layer (9) is placed on the mattress being processed (3),
detection means (11) configured and programmed to detect the position and the sizes of the mattress being processed (3) and of the functional layer (9),
a control unit (12) operatively connected at least to the first movement means (2), to the second movement means (8) and to the detection means (11), and programmed to:
- receive a detection signal (S1) from the detection means (11) indicating the position and the sizes of the mattress being processed (3) and of the functional layer (9), **characterized in that** said control unit (12) is further programmed to:
- generate a control signal (S2) of the first and second movement means (2, 8) to change the position of the mattress being processed (3) and of the functional layer (9) as a function of the detection signal (S1) so as to cause the position of the mattress being processed (3) to coincide with the functional layer (9) along the relative movement path at the placement station (10).

2. The machine for packaging mattresses according to claim 1, wherein the second movement means (8) comprise an end conveyor (13) leading to the placement station (10) and positioned inclined relative to a horizontal plane, wherein the machine (1) comprises adjusting means configured to change the inclination of the end conveyor (13) and wherein the control unit (12) is operatively connected to the adjusting means and is programmed to activate them so as to change the inclination of the end conveyor (13) as a function of the thickness of the mattress being processed (3).

3. The machine for packaging mattresses according to claim 2, wherein the packaging machine (1) is configured to package multilayer mattresses, wherein each functional layer is a homogeneous layer as regards the material and/or the structure.

4. The machine for packaging mattresses according to any one of the preceding claims, wherein the functional layer (9) to be applied to the mattress being processed comprises at least one flank (130, 140) designed to partly delimit a space (160) inside the mattress and wherein the packaging machine comprises means (14) for gripping and stiffening the flank which are movable between the second movement path (P2) and the placement station (10).

5. The machine for packaging mattresses according to claim 4, wherein the functional layer to be applied to the mattress being processed comprises a central portion designed to be housed in the space (160) inside the mattress and wherein the packaging machine comprises means for gripping the central portion which are configured to place the central portion between the flanks (130, 140).

6. The machine for packaging mattresses according to any one of the preceding claims, wherein the control unit (12) is programmed to control the first movement means (2) so as to move the mattress being processed (3) alternatively according to the first feed direction (V1) and according to a withdrawal direction (V3), which is opposite to the first feed direction (V1), at least between the means for applying the adhesive material (5) and the placement station (10).

7. A method for packaging mattresses comprising at least two functional layers, the packaging method comprising:
moving a mattress being processed (3) along a first movement path (P1) and in a first feed direction (V1), the mattress being processed comprising one or more functional layers,
distributing adhesive material on a surface of the mattress being processed (3) which is positioned along the first movement path (P1),
moving a functional layer (9) to be applied to the mattress being processed along a second movement path (P2) and according to a second feed direction (V2), the second movement path being located preferably at least partly above the first movement path and converging with the first movement path at a placement station (10) wherein the functional layer is placed on the mattress being processed,
detecting the position and the sizes of the mattress being processed and of the functional layer,
changing the position of the mattress being processed and of the functional layer as a function of the position and preferably of the sizes of the mattress being processed and of the functional layer so as to cause the position of the mattress being processed to coincide with the functional layer along the relative movement path at the placement station,
placing the functional layer on the mattress being processed at the placement station.

8. The method for packaging mattresses according to claim 7, comprising changing the inclination of an end stretch (13) of the second movement path (P2) as a function of the thickness of the mattress being processed.

9. The method for packaging mattresses according to claim 8, for packaging multilayer mattresses, wherein each functional layer is a homogeneous layer as regards the material and/or the structure.

10. The method for packaging mattresses according to any one of claims 7 to 9, wherein the functional layer to be applied to the mattress being processed comprises at least one flank (130, 140) designed to partly delimit a space (160) inside the mattress and wherein the method comprises taking and stiffening the flank to transfer it between the second movement path (P2) and the placement station (10).

11. The method for packaging mattresses according to claim 10, wherein the functional layer to be applied to the mattress being processed comprises a central portion designed to be housed in the space (160) inside the mattress and wherein the packaging method comprises taking the central portion and placing it between the flanks (130, 140).

12. The method for packaging mattresses according to any one of claims 7 to 11, comprising moving the mattress being processed alternatively according to the first feed direction (V1) and according to a withdrawal direction (V3) which is opposite to the first feed direction (V1), repeating the step of distributing the adhesive material and the step of placing the functional layer on the mattress being processed.

## Patentansprüche

1. Maschine (1) zum Verpacken von Matratzen (100), umfassend mindestens zwei Funktionsschichten (110, 120, 150), wobei die Verpackungsmaschine umfasst:
erste Bewegungsmittel (2), die ausgelegt sind, um eine zu verarbeitende Matratze (3) entlang eines ersten Bewegungswegs (P1) und nach einer ersten Zuführungsrichtung (V1) zu bewegen, wobei die zu verarbeitende Matratze (3) eine oder mehrere Funktionsschichten umfasst;
Mittel zum Auftragen von Haftmaterial (5), die entlang des ersten Bewegungswegs (P1) positioniert und ausgelegt sind, um Haftmaterial auf einer Oberfläche der zu verarbeitenden Matratze (3), die entlang des ersten Bewegungswegs (P1) positioniert ist, zu verteilen;
zweite Bewegungsmittel (8), die ausgelegt sind, um eine an der zu verarbeitenden Matratze (3) anzubringende Funktionsschicht (9) entlang eines zweiten Bewegungswegs (P2) und nach einer zweiten Zuführungsrichtung (V2) zu bewegen, wobei der zweite Bewegungsweg (P2) vorzugsweise mindestens teilweise über dem ersten Bewegungsweg (P1) angeordnet ist und mit dem ersten Bewegungsweg (P1) an einer Platzierungsstation (10) zusammenläuft, an der die Funktionsschicht (9) auf der zu verarbeitenden Matratze (3) platziert wird;
Erfassungsmittel (11), die ausgelegt und programmiert sind, um die Position und Abmessungen der zu verarbeitenden Matratze (3) und der Funktionsschicht (9) zu erfassen;
ein Steuergerät (12), das betriebswirksam mindestens mit den ersten Bewegungsmitteln (2), den zweiten Bewegungsmitteln (8) und den Erfassungsmitteln (11) verbunden und programmiert ist, um
- ein Erfassungssignal (S1) von den Erfassungsmitteln (11) zu empfangen, das die Position und Abmessungen der zu verarbeitenden Matratze (3) und der Funktionsschicht (9) angibt, **dadurch gekennzeichnet, dass** das Steuergerät (12) zudem programmiert ist, um
- ein Steuersignal (S2) der ersten und zweiten Bewegungsmittel (2, 8) zu generieren, um die Position der zu verarbeitenden Matratze (3) und der Funktionsschicht (9) als eine Funktion des Erfassungssignals (S1) zu ändern, sodass bewirkt wird, dass die Position der zu verarbeitenden Matratze (3) mit der Funktionsschicht (9) entlang des jeweiligen Bewegungswegs an der Platzierungsstation (10) übereinstimmt.

2. Maschine zum Verpacken von Matratzen nach Anspruch 1, wobei die zweiten Bewegungsmittel (8) einen Endförderer (13) umfassen, der zur Platzierungsstation (10) führt und relativ zu einer horizontalen Ebene geneigt platziert ist, wobei die Maschine (1) Justierungsmittel umfasst, die ausgelegt sind, um die Neigung des Endförderers (13) zu verändern, und wobei das Steuergerät (12) betriebswirksam mit den Justierungsmitteln verbunden und programmiert ist, um diese zu aktivieren, sodass die Neigung des Endförderers (13) als eine Funktion der Dicke der zu verarbeitenden Matratze (3) geändert wird.

3. Maschine zum Verpacken von Matratzen nach Anspruch 2, wobei die Verpackungsmaschine (1) ausgelegt ist, um mehrschichtige Matratzen zu verpacken, wobei eine jede Funktionsschicht eine homogene Schicht ist, was das Material und/oder die Struktur betrifft.

4. Maschine zum Verpacken von Matratzen nach einem der vorhergehenden Ansprüche, wobei die Funktionsschicht (9), die an der zu verarbeitenden Matratze anzubringen ist, mindestens eine Flanke (130, 140) umfasst, die ausgestaltet ist, um einen Bereich (160) in der Matratze mindestens teilweise abzugrenzen, und wobei die Verpackungsmaschine Mittel (14) zum Greifen und Versteifen der Flanke umfasst, die zwischen dem zweiten Bewegungsweg (P2) und der Platzierungsstation (10) bewegbar sind.

5. Maschine zum Verpacken von Matratzen nach Anspruch 4, wobei die Funktionsschicht, die an der zu verarbeitenden Matratze anzubringen ist, einen mittigen Abschnitt umfasst, der ausgestaltet ist, um im Bereich (160) in der Matratze untergebracht zu werden, und wobei die Verpackungsmaschine Mittel zum Greifen des mittigen Abschnitts umfasst, die ausgelegt sind, um den mittigen Abschnitt zwischen den Flanken (130, 140) zu platzieren.

6. Maschine zum Verpacken von Matratzen nach einem der vorhergehenden Ansprüche, wobei das Steuergerät (12) programmiert ist, um die ersten Bewegungsmittel (2) zu steuern, sodass die zu verarbeitende Matratze (3) alternativ nach der ersten Zuführungsrichtung (V1) und nach einer Rückzugsrichtung (V3) bewegt wird, die entgegengesetzt zur ersten Zuführungsrichtung (V1) verläuft, zumindest zwischen den Mitteln zum Auftragen des Haftmaterials (5) und der Platzierungsstation (10).

7. Verfahren zum Verpacken von Matratzen, umfassend mindestens zwei Funktionsschichten, wobei das Verpackungsverfahren umfasst:
Bewegen einer zu verarbeitenden Matratze (3) entlang eines ersten Bewegungswegs (P1) und in eine erste Zuführungsrichtung (V1), wobei die zu verarbeitende Matratze eine oder mehrere Funktionsschichten umfasst;
Verteilen von Haftmaterial auf einer Oberfläche der zu verarbeitenden Matratze (3), die entlang des ersten Bewegungswegs (P1) positioniert ist, Bewegen einer an der zu verarbeitenden Matratze anzubringende Funktionsschicht (9) entlang eines zweiten Bewegungswegs (P2) und nach einer zweiten Zuführungsrichtung (V2), wobei der zweite Bewegungsweg vorzugsweise mindestens teilweise über dem ersten Bewegungsweg angeordnet ist und mit dem ersten Bewegungsweg an einer Platzierungsstation (10) zusammenläuft, an der die Funktionsschicht auf der zu verarbeitenden Matratze platziert wird;
Erfassen der Position und Abmessungen der zu verarbeitenden Matratze und der Funktionsschicht;
Ändern der Position der zu verarbeitenden Matratze und der Funktionsschicht als eine Funktion der Position und vorzugsweise der Abmessungen der zu verarbeitenden Matratze und der Funktionsschicht, sodass bewirkt wird, dass die Position der zu verarbeitenden Matratze mit der Funktionsschicht entlang des jeweiligen Bewegungswegs an der Platzierungsstation übereinstimmt;
Platzieren der Funktionsschicht auf der zu verarbeitenden Matratze an der Platzierungsstation.

8. Verfahren zum Verpacken von Matratzen nach Anspruch 7, umfassend das Verändern der Neigung eines Endteilstücks (13) des zweiten Bewegungswegs (P2) als eine Funktion der Dicke der zu verarbeitenden Matratze.

9. Verfahren zum Verpacken von Matratzen nach Anspruch 8, um mehrschichtige Matratzen zu verpacken, wobei eine jede Funktionsschicht eine homogene Schicht ist, was das Material und/oder die Struktur betrifft.

10. Verfahren zum Verpacken von Matratzen nach einem der Ansprüche 7 bis 9, wobei die Funktionsschicht, die an der zu verarbeitenden Matratze anzubringen ist, mindestens eine Flanke (130, 140) umfasst, die ausgestaltet ist, um einen Bereich (160) in der Matratze mindestens teilweise abzugrenzen, und wobei das Verfahren das Aufnehmen und Versteifen der Flanke umfasst, um diese zwischen dem zweiten Bewegungsweg (P2) und der Platzierungsstation (10) zu transferieren.

11. Verfahren zum Verpacken von Matratzen nach Anspruch 10, wobei die Funktionsschicht, die an der zu verarbeitenden Matratze anzubringen ist, einen mittigen Abschnitt umfasst, der ausgestaltet ist, um im Bereich (160) in der Matratze untergebracht zu werden, und wobei das Verpackungsverfahren das Aufnehmen des mittigen Abschnitts und dessen Platzieren zwischen den Flanken (130, 140) umfasst.

12. Verfahren zum Verpacken von Matratzen nach einem der Ansprüche 7 bis 11, umfassend das Bewegen der zu verarbeitenden Matratze alternativ nach der ersten Zuführungsrichtung (V1) und nach einer Rückzugsrichtung (V3), die entgegengesetzt zur ersten Zuführungsrichtung (V1) verläuft, wobei der Schritt zum Verteilen des Haftmaterials und der Schritt zum Platzieren der Funktionsschicht auf der zu verarbeitenden Matratze wiederholt werden.

## Revendications

1. Machine (1) à emballer des matelas (100), comprenant au moins deux couches fonctionnelles (110, 120, 150), la machine à emballer comprenant :
des premiers moyens de déplacement (2) configurés pour déplacer un matelas étant traité (3) le long d'un premier parcours de déplacement (P1) et selon une première direction d'alimentation (V1), le matelas étant traité (3) comprenant une ou plusieurs couches fonctionnelles,
des moyens servant à appliquer un matériau adhésif (5) positionnés le long du premier parcours de déplacement (P1) et configurés pour répartir du matériau adhésif sur une surface du matelas étant traité (3) étant positionné le long du premier parcours de déplacement (P1),
des seconds moyens de déplacement (8) configurés pour déplacer une couche fonctionnelle (9) à appliquer au matelas étant traité (3) le long d'un second parcours de déplacement (P2) et selon une seconde direction d'alimentation (V2), le second parcours de déplacement (P2) étant situé, de préférence, au moins partiellement au-dessus du premier parcours de déplacement (P1) et convergeant avec le premier parcours de déplacement (P1) en correspondance d'un poste de placement (10) dans lequel la couche fonctionnelle (9) est placée sur le matelas étant traité (3),
des moyens de détection (11) configurés et programmés pour détecter la position et les dimensions du matelas étant traité (3) et de la couche fonctionnelle (9),
une unité de commande (12) fonctionnellement reliée au moins aux premiers moyens de déplacement (2), aux seconds moyens de déplacement (8) et aux moyens de détection (11), et programmée pour :
- recevoir un signal de détection (S1) des moyens de détection (11) indiquant la position et les dimensions du matelas étant traité (3) et de la couche fonctionnelle (9), **caractérisée en ce que** ladite unité de commande (12) est de plus programmée pour :
- générer un signal de commande (S2) des premier et second moyens de déplacement (2, 8) pour modifier la position du matelas étant traité (3) et de la couche fonctionnelle (9) en fonction du signal de détection (S1) de manière à faire coïncider la position du matelas étant traité (3) avec la couche fonctionnelle (9) le long du parcours de déplacement relatif en correspondance du poste de placement (10).

2. Machine à emballer des matelas selon la revendication 1, dans laquelle les seconds moyens de déplacement (8) comprennent un convoyeur d'extrémité (13) conduisant au poste de placement (10) et positionné incliné par rapport à un plan horizontal, dans laquelle la machine (1) comprend des moyens de réglage configurés pour modifier l'inclinaison du convoyeur d'extrémité (13) et dans laquelle l'unité de commande (12) est fonctionnellement reliée aux moyens de réglage et est programmée pour les activer de manière à modifier l'inclinaison du convoyeur d'extrémité (13) en fonction de l'épaisseur du matelas étant traité (3).

3. Machine à emballer des matelas selon la revendication 2, dans laquelle la machine à emballer (1) est configurée pour emballer des matelas multicouche, dans laquelle chaque couche fonctionnelle est une couche homogène en ce qui concerne le matériau et/ou la structure.

4. Machine à emballer des matelas selon l'une quelconque des revendications précédentes, dans laquelle la couche fonctionnelle (9) à appliquer au matelas étant traité comprend au moins un flanc (130, 140) conçu pour partiellement délimiter un espace (160) à l'intérieur du matelas et dans laquelle la machine à emballer comprend des moyens (14), servant à saisir et à raidir le flanc, étant mobiles entre le second parcours de déplacement (P2) et le poste de placement (10).

5. Machine à emballer des matelas selon la revendication 4, dans laquelle la couche fonctionnelle à appliquer au matelas étant traité comprend une partie centrale conçue pour être logée dans l'espace (160) à l'intérieur du matelas et dans laquelle la machine à emballer comprend des moyens, pour saisir la partie centrale, étant configurés pour placer la partie centrale entre les flancs (130, 140).

6. Machine à emballer des matelas selon l'une quelconque des revendications précédentes, dans laquelle l'unité de commande (12) est programmée pour commander les premiers moyens de déplacement (2) de sorte à déplacer le matelas étant traité (3) alternativement selon la première direction d'alimentation (V1) et selon une direction de recul (V3) étant opposée à la première direction d'alimentation (V1), au moins entre les moyens d'application du matériau adhésif (5) et le poste de placement (10).

7. Méthode à emballer des matelas, comprenant au moins deux couches fonctionnelles, la méthode à emballer comprenant :
déplacer un matelas étant traité (3) le long d'un premier parcours de déplacement (P1) et dans une première direction d'alimentation (V1), le matelas étant traité comprenant une ou plusieurs couches fonctionnelles,
répartir du matériau adhésif sur une surface du matelas étant traité (3) étant positionné le long du premier parcours de déplacement (P1), déplacer une couche fonctionnelle (9) à appliquer au matelas étant traité le long d'un second parcours de déplacement (P2) et selon une seconde direction d'alimentation (V2), le second parcours de déplacement étant situé, de préférence, au moins partiellement au-dessus du premier parcours de déplacement et convergeant avec le premier parcours de déplacement en correspondance d'un poste de placement (10) dans lequel la couche fonctionnelle est placée sur le matelas étant traité, détecter la position et les dimensions du matelas étant traité et de la couche fonctionnelle,
modifier la position du matelas étant traité et de la couche fonctionnelle en fonction de la position et, de préférence, des dimensions du matelas étant traité et de la couche fonctionnelle de manière à faire coïncider la position du matelas étant traité avec la couche fonctionnelle le long du parcours de déplacement relatif en correspondance du poste de placement,
placer la couche fonctionnelle sur le matelas étant traité au poste de placement.

8. Méthode à emballer des matelas selon la revendication 7, comprenant la modification de l'inclinaison d'une portion d'extrémité (13) du second parcours de déplacement (P2) en fonction de l'épaisseur du matelas étant traité.

9. Méthode à emballer des matelas selon la revendication 8, servant à emballer des matelas multicouche, dans laquelle chaque couche fonctionnelle est une couche homogène en ce qui concerne le matériau et/ou la structure.

10. Méthode à emballer des matelas selon l'une quelconque des revendications de 7 à 9, dans laquelle la couche fonctionnelle à appliquer au matelas étant traité comprend au moins un flanc (130, 140) conçu pour partiellement délimiter un espace (160) à l'intérieur du matelas et dans laquelle la méthode comprend la prise et le raidissement du flanc pour le transférer entre le second parcours de déplacement (P2) et le poste de placement (10).

11. Méthode à emballer des matelas selon la revendication 10, dans laquelle la couche fonctionnelle à appliquer au matelas étant traité comprend une partie centrale conçue pour être logée dans l'espace (160) à l'intérieur du matelas et dans laquelle la méthode comprend la prise de la partie centrale et la placer entre les flancs (130, 140).

12. Méthode à emballer des matelas selon l'une quelconque des revendications de 7 à 11, comprenant le déplacement du matelas étant traité alternativement selon la première direction d'alimentation (V1) et selon une direction de recul (V3) étant opposée à la première direction d'alimentation (V1), en répétant l'étape consistant à répartir le matériau adhésif et l'étape consistant à placer la couche fonctionnelle sur le matelas étant traité.
